# FASCICULE DE BREVET EUROPEEN

(11) **EP 2 112 567 B1**
(45) Date de publication et mention de la délivrance du brevet: **13.07.2016**
(21) Numéro de dépôt: 08405111.9
(22) Date de dépôt: 21.04.2008
(51) Int. Cl.: F16H 55/16, G04B 35/00, F16H 55/18

(54) **Engrenage à compensation de jeu pour mécanisme d'horlogerie.**
Getriebe mit Spielkompensation für Uhrmechanismus
Gear with backlash compensation for a timepiece mechanism

(43) Date de publication de la demande: 28.10.2009
(73) Titulaire: ROLEX SA, 1211 Genève 26 (CH)
(72) Inventeur: Bannier, Sébastien, CH-2615 Sonvilier (CH); Bonvin, Nicolas, CH-1214 Vernier (CH); Passannante, David, CH-2502 Bienne (CH)
(74) Mandataire: Moinas & Savoye SARL

(56) Documents cités:
- EP-A- 1 555 584
- EP-B1- 1 520 123
- GB-A- 160 277

## Description

La présente invention se rapporte à un engrenage à compensation de jeu pour mécanisme d'horlogerie, dans lequel au moins certaines des dents régulièrement réparties d'un des mobiles dentés partenaires à rattrapage de jeu présentent des parties élastiques flexibles dans le sens des épaisseurs respectives des dents et dans lequel certaines des dents sont susceptibles de transmettre temporairement un couple notablement supérieur au couple de transmission normal.

Pour réaliser des engrenages à rattrapage de jeu pour mécanisme d'horlogerie, au moins une partie de chaque dent de la roue à rattrapage de jeu est rendue élastique par une fente s'étendant dans le sens de la hauteur de la dent, comme décrit notamment dans le EP 1 555 584 ou le EP 1520123 B. Ceci a pour conséquence d'affaiblir la dent. Cet affaiblissement ne doit évidemment pas dépasser la résistance de la dent au couple à transmettre.

Dans les rouages de compteurs d'intervalles de temps, tels que les chronographes, les chronographes à rattrapante ou tout autre type de compteur dans lesquels la ou les aiguilles doivent être remises à zéro à la fin de l'intervalle de temps mesuré, on se trouve face à un couple maximal sensiblement plus élevé que le couple normal à transmettre lors de l'arrêt de l'aiguille ramenée à zéro. Un tel couple est susceptible de poser un problème du point de vue de la résistance des dents à cet endroit.

De façon plus générale, si une aiguille de compteur doit être maintenue à zéro sans exercer de force de friction sur cette roue, il ne faut pas que sa denture présente de jeu, puisqu'une telle roue ne fait pas partie d'un rouage mis sous tension comme l'est le rouage de finissage situé entre le barillet et l'échappement.

Le but de la présente invention est de remédier, au moins partiellement à cette uniformisation des dentures pour les engrenages à compensation de jeu pour mécanisme d'horlogerie, tout en conservant les propriétés de rattrapage de jeu recherchées.

A cet effet, la présente invention a pour objet un engrenage à compensation de jeu pour mécanisme d'horlogerie selon la revendication 1.

Le terme épaisseur utilisé ici pour les dents est celui utilisé en général pour les dents des roues dentées. Il s'agit de la dimension des dents mesurée sur le diamètre primitif de la roue dentée.

La solution proposée par la présente invention permet d'accroître ponctuellement la résistance de la denture à l'endroit où elle est soumise à une forte augmentation de couple à transmettre due par exemple à une forte décélération, consécutive à l'arrêt brusque du rouage lors du retour à zéro de l'aiguille d'un compteur en particulier. Dans ce cas le couple peut ponctuellement augmenter d'un facteur 100 au moins. Elle permet simultanément de compenser le jeu d'engrenage, même dans la ou les parties où la denture est renforcée.

Les dessins annexés illustrent, schématiquement et à titre d'exemple, une forme d'exécution de l'engrenage à compensation de jeu objet de l'invention.
La figure 1 est une vue en plan d'un rouage de compteur d'intervalles de temps avec remise à zéro muni d'un engrenage à rattrapage de jeu selon l'invention;
la figure 2 est une vue partielle agrandie en plan des roues de la figure 1;
Les figures 3 à 5 sont des vues partielles en plan qui illustrent des variantes de roues à rattrapage de jeu.

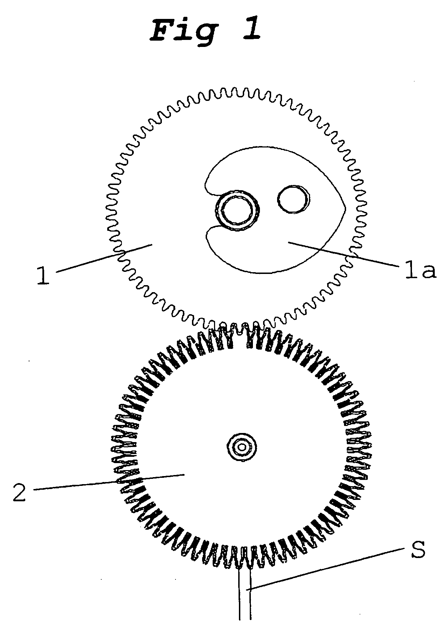

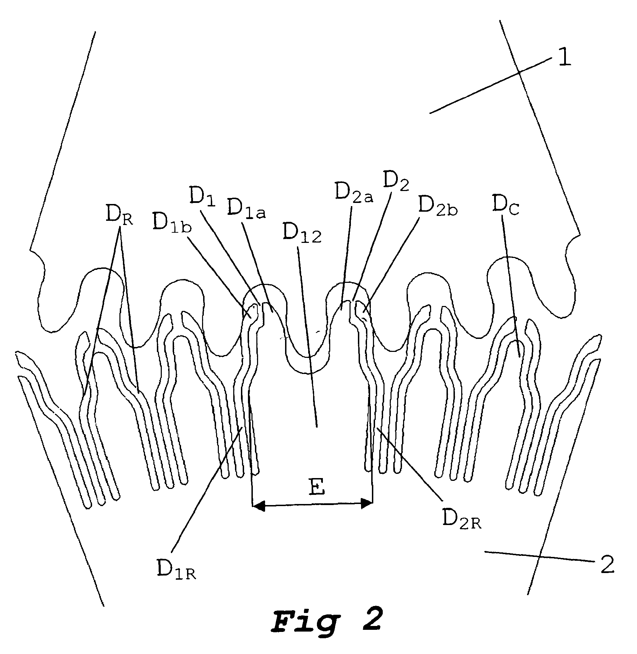

Le rouage de compteur illustré par la figure 1 comporte une roue d'entraînement 1 associée à une came de remise à zéro 1a. Cette roue engrène avec une roue des secondes 2 portant une aiguille des secondes S et munie d'une denture à rattrapage de jeu illustrée à plus grande échelle, notamment par la figure 2. Le reste du mécanisme de compteur n'est pas nécessaire à la compréhension de l'invention. Il suffit en effet de comprendre ce qui se passe lors de la remise à zéro de l'aiguille des secondes S par son levier de remise à zéro (non représenté), aussi appelé marteau de remise à zéro, bien connu dans les mécanismes de chronographes.

Contrairement à une aiguille des secondes solidaire de l'axe d'une roue des secondes faisant partie du rouage de finissage situé entre le barillet et l'échappement et qui est, de ce fait constamment sous la tension du ressort de barillet, une roue de compteur telle que la roue des secondes 2 est libre, en sorte que, si le jeu de la denture n'est pas rattrapé, l'aiguille des secondes S est soumise à un petit tremblement qui fait douter de la qualité de la pièce d'horlogerie. Pour éviter ce phénomène, un petit ressort de friction est généralement associé à de telles roues. Une telle friction crée une perturbation artificielle qui cause une perte d'énergie, synonyme de diminution de précision pour une pièce d'horlogerie.

Les nouvelles techniques de fabrication de roues dentées par LIGA (acronyme de l'allemand Lithographie, Galvanoformung et Abformung) et électroformage, les nouveaux procédés d'usinage notamment ceux utilisant des masques et des résines photo-polymérisables et/ou des procédés d'usinage chimique, permettent de réaliser des dents élastiques susceptibles de compenser le jeu dans les engrenages, évitant la nécessité d'utiliser un ressort de friction.

Dans le cas de la remise à zéro, les dents qui se situent en fin de course lors de la remise à zéro de la roue de secondes 2 à compensation de jeu, sont soumises à un couple plus élevé que les autres en raison de la forte décélération due à l'arrêt brusque du rouage.

Les deux conditions à remplir simultanément peuvent être satisfaites grâce aux deux dents adjacentes D₁ et D₂ de la roue 2. Ces dents ont la particularité suivante. Elles ont toutes deux chacune un flanc D₁ₐ, respectivement D₂ₐ, adjacent à l'autre dent, formé sur une partie pleine D₁₂ commune aux deux dents D₁, D₂.

Les autres flancs D_{1b}, D_{2b} des dents D₁, D₂, sont formés chacun sur une lame ressort D_{1R}, respectivement D_{2R}, qui présente tout d'abord une lame radiale rattachée à la roue, suivie des deux flancs D_{1b}, D_{2b} des dents proprement dites. Comme on peut le constater, la longueur de la partie radiale D_{1R}, D_{2R} flexible de ces lames est sensiblement égale voire, dans cet exemple, supérieure aux dimensions radiales des flancs correspondant à la hauteur des dents proprement dites de la roue partenaire (1), pour améliorer l'élasticité. Les deux flancs, rigides D₁ₐ, D₂ₐ, respectivement élastiques D_{1b}, D_{2b}, des dents D₁, D₂, sont donc séparés l'un de l'autre.

Pour augmenter au maximum l'épaisseur E de la partie de renfort D₁₂ commune aux deux dents D₁, D₂, et donc sa résistance au couple à transmettre, les deux fentes séparant respectivement cette partie de renfort D₁₂ de chaque lame ressort D_{1R}, D_{2R}, la partie de renfort D₁₂ est tout d'abord centrale aux extrémités des deux dents D₁, D₂, puis elle s'élargit de manière symétrique et ses deux faces latérales rejoignent la partie pleine de la roue. Ainsi la partie de renfort D₁₂ dont la largeur des parties renforcées des deux dents adjacentes correspond à plus de deux demi-dents offre la meilleure résistance vis-à-vis du couple qu'elle doit supporter au moment de l'arrêt de l'aiguille de seconde S lors de sa remise à zéro.

Les autres dents de la roue 2 à rattrapage de jeu sont des dents formées de deux lames ressorts D_{R} symétriques, dans cet exemple, par rapport à un élément central plus résistant D_{C}.

Les deux dents D₁, D₂, de la roue 2 à rattrapage de jeu permettent donc de satisfaire à la fois la nécessité d'augmenter ponctuellement la résistance de la denture tout en conservant la capacité à compenser le jeu à un endroit particulièrement critique.

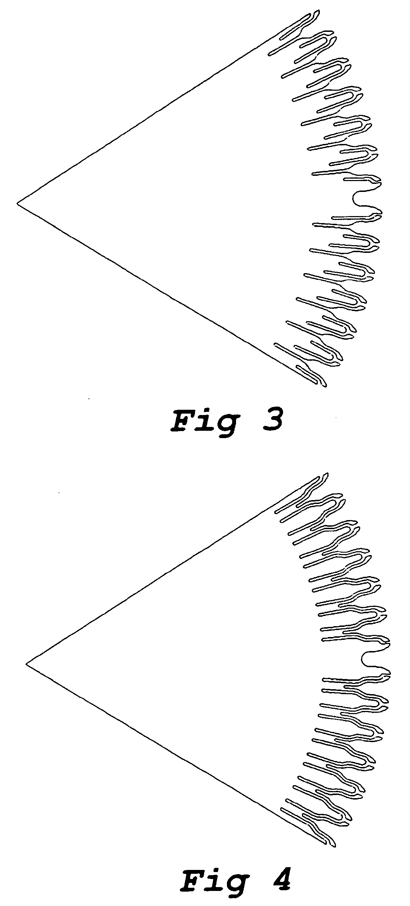

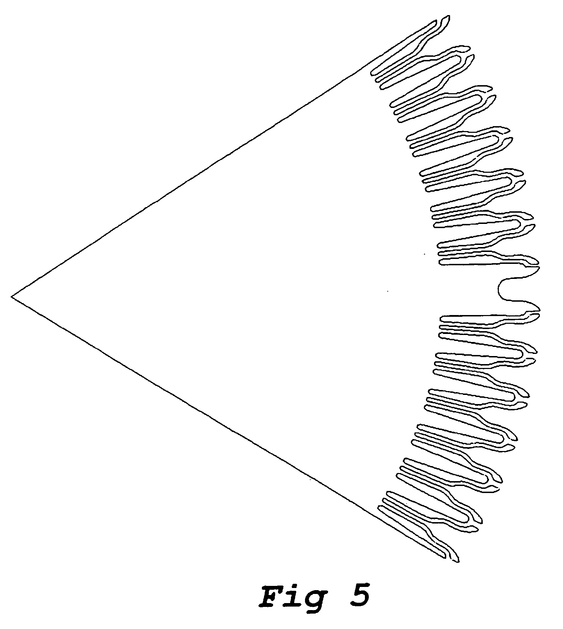

Les figures 3 à 5 illustrent différentes variantes de roues à rattrapage de jeu des figures 1 et 2 avec deux dents renforcées présentant des caractéristiques semblables à celles de la roue des figures 1 et 2. Les dents de la figure 3 sont asymétriques. Elles sont conçues pour pouvoir transmettre un couple plus élevé dans un sens que dans l'autre. Les dents de la figure 4 sont un peu plus rigides que celles des figures 3 et 5, pour transmettre plus de couple mais avec moins de rattrapage de jeu. La figure 5 est une variante optimisée de la figure 2.

Bien évidemment, le contexte décrit ci-dessus dans lequel cette roue à compensation de jeu est utilisée n'est donné qu'à titre d'exemple, mais cette denture particulière pourrait être utilisée dans toute autre application où un problème similaire est rencontré.

## Revendications

1. Engrenage à compensation de jeu pour mécanisme d'horlogerie, comprenant au moins deux mobiles partenaires dont au moins un mobile est un mobile à rattrapage de jeu, dans lequel au moins certaines des dents sont regulierement réparties et présentent des parties élastiques flexibles (D_{R}) dans le sens des épaisseurs respectives des dents et dans lequel certaines desdites dents présentant des parties élastiques flexibles sont susceptibles de transmettre temporairement un couple notablement supérieur au couple de transmission normal, dans lequel deux dents adjacentes (D₁, D₂) susceptibles de transmettre un couple notablement supérieur au couple de transmission normal comportent chacune un flanc rigide (D₁ₐ, D₂ₐ) solidaire d'une partie de renfort (D₁₂) et un flanc élastique (D_{1b}, D_{2b}) solidaire d'une partie plus flexible (D_{1R}, D_{2R}), les deux flancs rigides (D₁ₐ, D₂ₐ) des deux dents (D₁, D₂) étant adjacents, les flancs élastiques (D_{1b}, D_{2b}) des dents adjacentes (D₁, D₂) étant formés chacun sur une lame ressort.

2. Engrenage selon la revendication 1, dans lequel la largeur des parties renforcées de la partie de renfort (D₁₂) des deux dents adjacentes correspond à plus de deux demi-dents sur une partie au moins de sa hauteur.

3. Engrenage selon l'une des revendications précédentes, dans lequel les deux faces latérales de la partie de renfort (D₁₂) sont symétriques par rapport au rayon dudit mobile denté (2) passant au milieu de l'espace séparant les deux flancs rigides (D₁ₐ, D₂ₐ) adjacents de cette partie de renfort (D₁₂).

4. Engrenage selon l'une des revendications précédentes dans lequel la hauteur des dents du mobile à rattrapage de jeu (2) est supérieure à la hauteur des dents du mobile partenaire (1).

5. Engrenage selon l'une des revendications précédentes, **caractérisé en ce que** chaque lame ressort (D_{1R}, D_{2R}) présente une lame radiale rattachée au mobile à rattrapage de jeu suivie d'un flanc élastique (D_{1b}, D_{2b}).

6. Engrenage selon l'une des revendications précédentes, **caractérisé en ce que** les deux flancs, rigides (D₁ₐ, D₂ₐ), respectivement élastiques (D_{1b}, D_{2b}), des dents adjacentes (D₁, D₂), sont séparés l'un de l'autre.

7. Engrenage selon l'une des revendications précédentes, **caractérisé en ce qu'**il comprend deux fentes séparant, chacune, la partie de renfort (D₁₂) de chaque lame ressort (D_{1R}, D_{2R}).

8. Engrenage selon la revendication précédente, **caractérisé en ce que** la partie de renfort (D₁₂) est tout d'abord centrale aux extrémités des deux dents adjacentes (D₁, D₂), puis s'élargit de manière symétrique et les deux faces latérales de la partie de renfort (D₁₂) rejoignent la partie pleine du mobile à rattrapage de jeu.

9. Engrenage selon l'une des revendications précédentes, **caractérisé en ce que** les autres dents du mobile denté à rattrapage de jeu sont des dents formées de deux lames ressorts (D_{R}) symétriques par rapport à un élément central plus résistant (D_{C}).

10. Engrenage selon l'une des revendications 1 à 8, **caractérisé en ce que** les dents du mobile denté à rattrapage de jeu sont asymétriques.

11. Engrenage selon l'une des revendications précédentes, **caractérisé en ce qu'**il est un rouage de compteur comportant une roue d'entraînement (1) qui engrène une roue des secondes (2) à compensation de jeu.

12. Mécanisme d'horlogerie, **caractérisé en ce qu'**il comprend un engrenage selon l'une des revendications précédentes.

13. Pièce d'horlogerie, **caractérisée en ce qu'**elle comprend un engrenage selon l'une des revendications 1 à 11.

## Patentansprüche

1. Räderwerk mit Spielausgleich für ein Uhrwerk mit zwei Partnerrädern, von denen wenigstens ein Rad ein Spielbeseitigungsrad ist, bei dem wenigstens einige der Zähne gleichmäßig verteilt sind und in der jeweiligen Tiefenrichtung der Zähne elastische flexible Bereiche (D_{R}) aufweisen, und bei dem bestimmte elastische flexible Bereiche aufweisende Zähne dazu eingerichtet sind, zeitweilig ein Moment zu übertragen, das merklich größer als das normale Antriebsmoment ist, bei dem zwei ein merklich größeres Moment als das übliche Antriebsmoment übertragende Zähne (D₁, D₂) jeweils eine steife Flanke (D₁ₐ, D₂ₐ), die einstückig mit einem Verstärkungsbereich (D₁₂) ist, und eine elastische Flanke (D_{1b}, D_{2b}) aufweisen, die einstückig mit einem flexibleren Bereich (D_{1R}, D_{2R}) ist, wobei die beiden steifen Flanken (D₁ₐ, D₂ₐ) der beiden Zähne (D₁, D₂) benachbart sind und wobei die elastischen Flanken (D_{1b}, D_{2b}) der benachbarten Zähne (D₁, D₂) jeweils an einer Blattfeder ausgebildet sind.

2. Räderwerk nach Anspruch 1, bei dem die Größe der verstärkten Bereiche des Verstärkungsbereichs (D₁₂) der beiden benachbarten Zähne mehr als zwei Halbzähnen über einem Bereich wenigstens seiner Höhe entspricht.

3. Räderwerk nach einem der vorangehenden Ansprüche, bei dem die beiden Seitenflächen des Verstärkungsbereichs (D₁₂) in Bezug auf die Richtung des Zahnrads (2) symmetrisch sind, die in der Mitte des Raumbereichs verläuft, der die beiden benachbart des Verstärkungsbereichs (D₁₂) liegenden beiden steifen Flanken (D₁ₐ, D₂ₐ) trennt.

4. Räderwerk nach einem der vorangehenden Ansprüche, bei dem die Höhe der Zähne des Spielbeseitigungsrads (2) größer als die Höhe der Zähne des Partnerrads (1) ist.

5. Räderwerk nach einem der vorangehenden Ansprüche, **dadurch gekennzeichnet, dass** jede Blattfeder (D_{1R}, D_{2R}) ein Radialblatt aufweist, das an dem Spielbeseitigungsrad gefolgt von einer elastischen Flanke (D_{1b}, D_{2b}), angebracht ist.

6. Räderwerk nach einem der vorangehenden Ansprüche, **dadurch gekennzeichnet, dass** die jeweiligen steifen (D₁ₐ, D₂ₐ) und elastischen (D_{1b}, D_{2b}) Flanken von benachbarten Zähnen (D₁, D₂) voneinander beabstandet sind.

7. Räderwerk nach einem der vorangehenden Ansprüche, **dadurch gekennzeichnet, dass** es zwei Schlitze aufweist, die jeweils den Verstärkungsbereich (D₁₂) jeder Blattfeder (D_{1R}, D_{2R}) trennen.

8. Räderwerk nach dem vorangehenden Anspruch, **dadurch gekennzeichnet, dass** der Verstärkungsbereich (D₁₂) zunächst mittig in Bezug auf die Enden der beiden benachbarten Zähne (D₁, D₂) ist und sich danach auf symmetrische Art und Weise erweitert, um die beiden Seitenflächen des Verstärkungsbereichs (D₁₂) des ebenen Bereichs des Spielbeseitigungsrads zu treffen.

9. Räderwerk nach einem der vorangehenden Ansprüche, **dadurch gekennzeichnet, dass** die anderen Zähne des Spielbeseitigungszahnrads aus zwei Blattfedern (D_{R}), die symmetrisch in Bezug auf ein widerstandsfähigeres Mittenelement (D_{C}) sind, gebildet sind.

10. Räderwerk nach einem der Ansprüche 1 bis 8, **dadurch gekennzeichnet, dass** die Zähne des Spielbeseitigungszahnrads asymmetrisch sind.

11. Räderwerk nach einem der vorangehenden Ansprüche, **dadurch gekennzeichnet, dass** ein Zählerwerk ein Antriebsrad (1) aufweist, das ein Sekundenrad (2) mit Spielausgleich antreibt.

12. Uhrwerk, **dadurch gekennzeichnet, dass** es ein Räderwerk nach einem der vorangehenden Ansprüche aufweist.

13. Uhr, **dadurch gekennzeichnet, dass** es ein Räderwerk nach einem der Ansprüche 1 bis 11 aufweist.

## Claims

1. A backlash-compensating gear train for a horological mechanism, comprising at least two partner wheels, at least one of the wheels being an antibacklash wheel in which at least some of the teeth are uniformly distributed and have elastic flexible parts (D_{R}) in the direction of the respective thicknesses of the teeth and in which some of said teeth having flexible elastic parts are capable of temporarily transmitting a torque considerably greater than the normal drive torque, in which two adjacent teeth (D₁, D₂) capable of transmitting a torque considerably greater than the normal drive torque each comprise one rigid flank (D₁ₐ, D₂ₐ) integral with a reinforcing part (D₁₂), and one elastic flank (D_{1b}, D_{2b}) integral with a more flexible part (D_{1R}, D_{2R}), the two rigid parts (D₁ₐ, D₂ₐ) of the two teeth (D₁, D₂) being adjacent, the elastic flanks (D_{1b}, D_{2b}) of the two adjacent teeth (D₁, D₂) being each formed on a leaf spring.

2. The gear train as claimed in claim 1, in which the thickness of the reinforced parts of the reinforcing part (D₁₂) of the two adjacent teeth corresponds to more than two half-teeth on at least a part of its height.

3. The gear train as claimed in either of the preceding claims, in which the two side faces of the reinforcing part (D₁₂) are symmetrical relative to the radius of said toothed wheel unit (2) passing through the middle of the space between the two adjacent rigid flanks (D₁ₐ, D₂ₐ) of this reinforcing part (D₁₂).

4. The gear train as claimed in one of the preceding claims, in which the height of the teeth of the antibacklash wheel (2) is greater than the height of the teeth of the partner wheel (1).

5. The gear train as claimed in one of the preceding claims, **characterized in that** each leaf spring (D_{1R}, D_{2R}) presents a radial strip attached to the antibacklash wheel, followed by an elastic flank (D_{1b}, D_{2b}).

6. The gear train as claimed in one of the preceding claims, **characterized in that** the two rigid flanks (D₁ₐ, D₂ₐ), respectively elastic flanks (D_{1b}, D_{2b}), of the two adjacent teeth (D₁, D₂), are separate from each other.

7. The gear train as claimed in one of the preceding claims, **characterized in that** it comprises two slits separating each the reinforcing part (D₁₂) of each leaf spring (D_{1R}, D_{2R}).

8. The gear train as claimed in one of the preceding claims, **characterized in that** the reinforcing part (D₁₂) begins in the center of the ends of the two adjacent teeth (D₁, D₂), and then expands symmetrically and the two side faces of the reinforcing part (D₁₂) meet the solid part of the antibacklash wheel.

9. The gear train as claimed in one of the preceding claims, **characterized in that** the other teeth of the antibacklash wheel are teeth formed by two leaf springs (D_{R}) which are symmetrical about a stronger central element (Dc).

10. The gear train as claimed in one of claims 1 to 8, **characterized in that** the teeth of the antibacklash wheel are asymmetrical.

11. The gear train as claimed in one of the preceding claims, **characterized in that** it is a timer wheel train comprising a drive wheel (1) which meshes with a seconds wheel (2) having antibacklash teeth.

12. Horological mechanism, **characterized in that** it comprises a gear train as claimed in one of the preceding claims.

13. Timepiece, **characterized in that** it comprises a gear train as claimed in one of claims 1 to 11.
